# EUROPEAN PATENT SPECIFICATION

(11) **EP 2 490 971 B1**
(45) Date of publication and mention of the grant of the patent: **22.08.2018**
(21) Application number: 10824521.8
(22) Date of filing: 20.10.2010
(51) Int. Cl.: B66B 5/04, B66B 5/00, B66B 5/16, F16D 11/14, F16D 7/08

(54) **UNINTENDED MOVEMENT GOVERNOR AND ELEVATOR**
STEUERGERÄT FUR UNBEABSICHTIGTE BEWEGUNG UND AUFZUG
RÉGULATEUR DU MOVEMENT ACCIDENTEL ET ASCENSEUR

(30) Priority: 21.10.2009 FI 20090385
(43) Date of publication of application: 29.08.2012
(73) Proprietor: Kone Corporation, 00330 Helsinki (FI)
(72) Inventor: MANNINEN, Veijo, FI-05200 Rajamäki (FI); RÄSÄNEN, Matti, FI-05800 Hyvinkää (FI)
(74) Representative: Glück Kritzenberger Patentanwälte PartGmbB
(86) International application number: PCT/FI2010/050823
(87) International publication number: WO 2011/048270

(56) References cited:
- EP-A2- 0 628 510
- WO-A1-2007/122282
- WO-A1-2010/084563
- WO-A1-2010/084564
- WO-A1-2010/084565
- DE-C1- 19 831 649
- DE-U1- 29 922 874
- JP-A- S5 811 484
- JP-A- 2007 232 184
- SU-A1- 549 615

## Description

### FIELD OF THE INVENTION

The object of the invention is a movement governor, more particularly for use in people movers, such as in elevators, and also an elevator.

### BACKGROUND OF THE INVENTION

Generally an elevator is provided with a safety gear, which can be triggered with the tripping of the overspeed governor. The conventional solution is that when the speed of the elevator increases to a limit value set in advance for the overspeed governor, the overspeed governor trips the safety gear via the same rope as the rope via which the overspeed governor monitors the speed of the elevator. In addition to the elevator gripping to the guide rails in an overspeed situation, there are situations in which the safety gear should be made to operate even if the speed of the elevator did not exceed the permitted speed. These situations are, among others, the testing of the safety gear in connection with an inspection of the elevator or the stopping of the elevator by means of the safety gear if the elevator moves without control (unintended movement), e.g. starts to leave from a floor level with the doors partly or fully open. In addition, it would be advantageous if the overspeed governor were able to function as an anti-creep apparatus, i.e. to prevent gradual sliding (e.g. caused by rope slip) of the elevator from the floor. EP 0628510 A2 discloses such a solution. A problem in prior-art solutions has been that if it is desired to form the overspeed governor to perform an anti-creep function, the apparatus must be able to permit transient sagging of the elevator car that sometimes occurs in a loading situation. In other words, the anti-creep function could start the gripping only when the elevator car has moved a certain pre-determined distance from the floor (e.g. 70-100mm). It has been problematic to achieve the permitting of free movement of this limited distance with simple arrangements. At the same time the size of the overspeed governor should be kept small both in the radial direction and in the thickness direction. A known problem has been that actuator structures added to an overspeed governor are expensive, large in size and complex.

The WO 2010/084563 A1 as well as the WO 2010/084565 A1, each published 29.07.2010, disclose a safety device according to the preamble of claim 1.

### AIM OF THE INVENTION

The aim of the invention is to eliminate the aforementioned drawbacks, among others, of prior-art solutions. More particularly the aim of the invention is to produce an improved unintended movement governor and elevator. The aim of the invention is further to produce one or more of the following advantages, among others:
- An unintended movement governor of an elevator is achieved that is well suited as an anti-creep apparatus.
- A compact unintended movement governor is achieved, the size of which, particularly in the axial direction, can be kept compact.
- An unintended movement governor is achieved that is reliable, simple and easy to service.
- An elevator is achieved, the unintended movement governor of which can be remotely triggered.
- An unintended movement governor is achieved that is well suited to modernizations, because it is suited to different types of elevators, e.g. to elevators provided with a counterweight and elevators without a counterweight.
- An elevator is achieved, in which a separate overspeed governor and/or anti-creep apparatus and/or unintended movement detector is not necessarily needed.
- An elevator is achieved that functions well irrespective of the direction of movement of the elevator car.
- An unintended movement governor is achieved that functions better than before in both directions of rotation.
- An unintended movement governor is achieved that is better protected than before from impact caused by triggering of the unintended movement governor.

### SUMMARY OF THE INVENTION

The invention is based on a concept, in which relative movement between the pulley of the unintended movement governor and the part normally rotating along with the pulley is permitted even after the movement of the part normally rotating along with the pulley has been limited. Only when the relative movement reaches a certain pre-selected amount is stopping of the pulley, or at least essential deceleration of the pulley, performed, as a result of which stopping/deceleration the movement of the object of movement limitation is intended to be limited. In this way a movement margin for the pulley is enabled, within the scope of which the movement of the object is not limited by affecting the rotation of the pulley.

In one basic embodiment of the concept according to the invention, the unintended movement governor for limiting the movement of a moving object comprises a pulley (for monitoring the movement of the object to be limited), a part 2, coupling means, with which the part is connected to the pulley, for rotating the part along with the pulley via the coupling means, and means, which means can be switched into a state limiting the movement of the part. When the means are in the state limiting the movement of the part they are arranged to impair the rotation of the part along with the pulley such that relative movement is caused between the part and the pulley if the pulley rotates, and when the part is in the limited state in terms of its movement it is arranged to stop the rotation of the pulley (or at least essentially decelerate the rotation), after the part and the pulley have moved a pre-determined amount with respect to each other. An advantage is that a certain essentially free rotation can be permitted for the pulley before stopping/decelerating the rotation of the pulley. The aforementioned part is connected to the pulley with coupling means permanently, so that the part is able to rotate along with the pulley in normal drive of the elevator. The part and the pulley are able to move with respect to each other because the coupling means permit movement of the pulley and the part with respect to each other to the extent of a limited movement margin. This type of solution is particularly well suited as an anti-creep apparatus of an elevator because limited sagging/upward-creeping distance can be simply enabled with it. Most preferably the pulley is fully stopped although sometimes also deceleration can be sufficient, e.g. for triggering the safety gear.

In a more refined embodiment of the concept according to the invention, the part is arranged to rotate moved by the pulley around the same center of rotation with the pulley and it comprises a section surrounding the center of rotation, to which the means can be transferred to act on the movement of the part in a limiting manner, preferably essentially irrespective of the position to which the part has rotated. An advantage is that the solution is easy to arrange to be such that the aforementioned pre-determined amount does not essentially depend on the stopping position of the pulley.

In a more refined embodiment of the concept according to the invention, which embodiment is preferably according to one or more embodiments described above, the section surrounding the center of rotation comprises effect points for means (3), which effect points are essentially evenly distributed around the center of rotation and pass around the center of rotation forming a full effect point circle. An advantage is that the aforementioned pre-determined amount does not essentially depend on the stopping position of the pulley. Thus, e.g. the free sagging margin of an elevator car, the movement of which it is endeavored to limit with the apparatus, can be fitted to be constant irrespective of the stopping position of the pulley.

In a more refined embodiment of the concept according to the invention, which embodiment is preferably according to one or more embodiments described above, the part (2) is essentially disk-shaped and arranged to rotate moved by the pulley (1) around the same center of rotation with the pulley 1. In this way a simple structure and easily implementable stopping distance that is irrespective of the rotation position are achieved.

In a more refined embodiment of the concept according to the invention, which embodiment is preferably according to one or more embodiments described above, the aforementioned moving object is an elevator car or a counterweight.

In a more refined embodiment of the concept according to the invention, which embodiment is preferably according to one or more embodiments described above, in the state limiting the movement of the part 2 the means (3) act on the part 2 in its radial direction. In this way a compact structure in the axial direction, among others, is achieved. The structure is also simple to manufacture, particularly machining is easy if the part 2 comprises the section (e.g. disk-shaped) surrounding the center of rotation.

In a more refined embodiment of the concept according to the invention, which embodiment is preferably according to one or more embodiments described above, the means 3 comprise an element, such as a detent or friction piece that can be transferred to act on the part (2) by moving it in the radial direction to the rotation trajectory of the part (2) or against the part 2. An advantage is compactness and simplicity.

In a more refined embodiment of the concept according to the invention, which embodiment is preferably according to one or more embodiments described above, in the state limiting the movement the means 3 take support force for limiting the movement of the part 2 from a structure (F) supported in its position and limit the movement of the part (2) by causing profile locking and/or friction between the means (3) and the part (2). An advantage is a reliable limitation of movement of the part 2. The structure can also be manufactured to be simple. According to the invention, when the means (3) are in the state limiting the movement of the part (2) the means (3) are arranged to cause relative movement between the part (2) and the pulley (1) when the pulley rotates in either direction of rotation. A certain amount of relative movement starts the gripping irrespective of the direction of rotation. An advantage is that a bi-directional anti-creep function is achieved.

In a more refined embodiment of the concept according to the invention, which embodiment is preferably according to one or more embodiments described above, it comprises means (4) for positioning the part (2) in relation to the pulley in a certain basic position (I) irrespective of the position of the pulley and/or of the speed of rotation (particularly irrespective of the centrifugal forces) of the pulley. An advantage is that the means rotating along with the pulley 1 are not disturbed by the rotational movement. The structure is safe and operationally reliable. An advantage is also that when the positioning always occurs into the same basic position, it is always easy to keep the same the amount of relative movement before the stopping of the pulley 1 by means of the part 2.

In a more refined embodiment of the concept according to the invention, which embodiment is preferably according to one or more embodiments described above, if the pulley rotates in the first direction when the means 3 are in the state limiting the movement of the part 2, the part 2 is arranged to stop the rotation of the pulley 1 after the part 2 and the pulley 1 have moved a pre-determined amount A with respect to each other away from the basic position I, and if the pulley rotates in the second direction when the means 3 are in the state limiting the movement of the part 2, the part 2 is arranged to stop the rotation of the pulley 1 after the part 2 and the pulley 1 have moved a pre-determined amount B with respect to each other away from the basic position (I). An advantage is bi-directionality. The amount A can be the same as or different than the amount B. When the amounts A and B differ from each other, e.g. the sagging margin of an elevator car can be selected to be different than the upward-creeping margin of the car.

In a more refined embodiment of the concept according to the invention, which embodiment is preferably according to one or more embodiments described above, it comprises means 4 for positioning the part in relation to the pulley in a monostable manner into a certain basic position (I). An advantage is that the initial situation, in which the part 2 is in relation to the pulley 1 at the moment of activation of the means 3, is always known. The movement margin/amount of relative movement can be easily selected to be that desired.

In a more refined embodiment of the concept according to the invention, which embodiment is preferably according to one or more embodiments described above, the means 4 comprise at least one spring, which is arranged to act between the pulley and the part, preferably such that the aforementioned spring is arranged to position the pulley and the part by means of the spring force acting in the axial direction. An advantage is a simple, compact, light and reliable structure.

In a more refined embodiment of the concept according to the invention, which embodiment is preferably according to one or more embodiments described above, the means 4 are arranged to position the pulley and the part by means of the force acting in the axial direction, which means 4 comprise a part, which contains a surface, which surface faces obliquely in relation to the plane of rotation in at least a second direction of rotation, and a positioning element, such as a bearing, which positioning element and inclined surface are arranged to press against each other with the aforementioned force acting in the axial direction, and by means of the force component that points in the direction of rotation and acts between the inclined surface and the positioning element, which force component is caused by the inclination of the inclined surface, the pulley 1 and the part 2 are arranged to return to the basic position I. In this case, e.g. the inclined surface can be supported on the pulley and the positioning element on the part 2 (or alternatively it could be *vice versa*). An advantage of the embodiment is a simple, reliable and compact positioning structure.

In a more refined embodiment of the concept according to the invention, which embodiment is preferably according to one or more embodiments described above, the means 4 are arranged to position the pulley and the part by means of the force acting in the axial direction, which force in the axial direction causes a force component pointing in the direction of rotation by means of the shaping of the parts between the pulley and the part. The force component in question endeavors to move the part 2 and the pulley with respect to each other back to the basic position I or to keep them in the basic position I. An advantage of the embodiment is a simple positioning structure.

In a more refined embodiment of the concept according to the invention, which embodiment is preferably according to one or more embodiments described above, the unintended movement governor comprises means 4 for positioning the part, which means are arranged to impair the relative movement of the part and of the pulley away from the basic position I and to return the part and the pulley to the basic position I if the movement of the part is not limited with means 3. Thus the parts are returned to the desired basic position I in relation to each other and the system can be designed with the basic assumption that their position in relation to each other is this basic position I if the movement of the part 2 is not limited. This enables precision of the movement margins/amount of relative movements.

In a more refined embodiment of the concept according to the invention, which embodiment is preferably according to one or more embodiments described above, the means 4 resist the relative movement between the part and the pulley, which resisting force preferably differs from constant, preferably such that the resistance decreases after moving away from the basic position I (threshold resisting force), preferably quickly after moving, after which the resisting force can increase. An advantage is that the change of speed of the rotational movement does not so easily affect the relative position of the part 2 and of the pulley.

In a more refined embodiment of the concept according to the invention, which embodiment is preferably according to one or more embodiments described above, the part 2 is arranged to stop the rotation of the pulley after the part and the pulley have moved a pre-determined amount (A,B) with respect to each other, but which embodiment comprises a friction joint somewhere between the part and the pulley, which joint is arranged to give way and to permit rotation of the pulley even after the part and the pulley have moved the pre-determined amount (A,B) with respect to each other, if a moment that exceeds a preset limit is exerted on the friction joint. An advantage is that the parts will not break easily.

In a more refined embodiment of the concept according to the invention, which embodiment is preferably according to one or more embodiments described above, the coupling means permit the movement of the pulley 1 and of the part 2 with respect to each other to the extent of a limited movement margin. One advantage, among others, is the simplicity of the structure.

In a more refined embodiment of the concept according to the invention, which embodiment is preferably according to one or more embodiments described above, the unintended movement governor, preferably the aforementioned pulley, comprises means, such as e.g. a rope groove, for transmitting the movement of the object, such as e.g. of an elevator car, to the pulley. This is necessary for monitoring the movement of the object to be limited with :the unintended movement governor. Correspondingly the triggering of braking, preferably of gripping, can be transmitted to the brakes of the aforementioned moving object, preferably to the safety gears, via these means. On the other hand, triggering can also be performed otherwise, such as electrically by sending a braking command to the brake, such as to the safety gear, that is in connection with the object, such as with an elevator car or a counterweight, of the moving elevator. Generally speaking, the stopping or at least deceleration of the aforementioned pulley is arranged to cause triggering of the brake, preferably of a safety gear, that is disposed on the elevator car.

In a more refined embodiment of the concept according to the invention, which embodiment is preferably according to one or more embodiments described above, the aforementioned pulley comprises a rope groove. By means of the rope groove the pulley can be connected to the brake apparatus of the aforementioned moving object, such as to the safety gear apparatus. In this way at the same time the movement of the elevator car can be transmitted to the pulley via the rope groove.

In a more refined embodiment of the concept according to the invention, which embodiment is preferably according to one or more embodiments described above, the unintended movement governor is the overspeed governor of an elevator. An advantage is that a number of functions are combined in the same apparatus.

In one basic embodiment of the concept according to the invention, the elevator comprises at least an elevator car, which is arranged to travel backwards and forwards in essentially the vertical direction, preferably along guide rails, and a safety gear disposed in connection with the elevator car, and also at least one unintended movement governor, which comprises at least a pulley, which is fitted to rotate moved by the elevator car and which is connected to a safety gear apparatus that is in connection with the elevator car, preferably via a diverting pulley and a rope that passes around the pulley. The unintended movement governor is according to one of the embodiments described above. One advantage, among others, is a preferred elevator in terms of anti-creep functions, which elevator is easy to arrange to permit a certain limited sagging margin and/or upward-creeping distance, after exceedance of which additional movement of the elevator car can be prevented.

In a more refined embodiment of the concept according to the invention, the part 2 of the elevator is arranged to stop the rotation of the pulley after the part and the pulley have moved a pre-determined amount (A,B) with respect to each other, but which embodiment comprises a friction joint somewhere between the part and the pulley, which joint is arranged to give way and to permit the rotation of the pulley even after the part 2 and the pulley have moved a pre-determined amount (A,B) with respect to each other, if a moment that exceeds a preset limit is exerted on the friction joint, however, preferably such that when the friction joint maintains in its slipping such a great friction force that the force decelerating the pulley, which force is transferred to the pulley via the part 2, exceeds in its magnitude the force needed to trigger the safety gears. An advantage is low susceptibility to breakage of the structure, but still a reliable starting of the gripping.

In a more refined embodiment of the concept according to the invention, which embodiment is preferably according to one or more embodiments described above, the aforementioned friction joint gives way before the grip between the rope groove of the pulley and the overspeed governor rope that rotates the pulley fails. An advantage is a small susceptibility to breakage of the structure, but still a reliable starting of the gripping.

In a more refined embodiment of the concept according to the invention, which embodiment is preferably according to one or more embodiments described above, the unintended movement governor of an elevator comprises second means for decelerating the speed of rotation of the pulley, which second means are preferably arranged to activate on the principle of inertia (e.g. on the centrifugal principle) depending on the speed of rotation of the overspeed governor pulley. An advantage is that a number of functions are combined in the same apparatus.

In a more refined embodiment of the concept according to the invention, which embodiment is preferably according to one or more embodiments described above, the aforementioned unintended movement governor also comprises means for receiving a signal, with which means the control data for switching the means 3 into the state limiting the movement of the part 2 and/or out of the state can be supplied to the unintended movement governor from a distance. An advantage is that the control of the elevator system is enabled, e.g. control when coming to the floor for starting the anti-creep function or, for instance, remote triggering when the car moves.

In a more refined embodiment of the concept according to the invention, which embodiment is preferably according to one or more embodiments described above, when the means 3 are in the state limiting the movement of the part 2 the unintended movement governor is arranged to permit the movement of the elevator car with respect to the floor for a certain pre-determined distance, which distance is preferably a distance between 70-100 mm, after moving which distance as a result of limiting the movement of the part 2 the rotation of the pulley is arranged to stop, which stopping of the pulley is arranged to cause triggering of the brake, preferably of a safety gear, that is disposed on the elevator car. An advantage is an anti-creep function of good quality.

In a more refined, embodiment of the concept according to the invention, which embodiment is preferably according to one or more embodiments described above, the control comprised in the elevator is arranged to switch the means into a state limiting the movement of the part in connection with the stopping of the elevator car at a floor, preferably at the moment of activation of the machinery brake or after it, preferably at the latest 1 second after the moment of activation of the machinery brake. In this way the automated use of the apparatus for the anti-creep function ensures that the elevator car does not move away from the floor.

### LIST OF FIGURES

In the following, the invention will be described in detail by the aid of some examples with reference to the attached drawings, wherein
Fig. 1 presents a three-dimensional view of an overspeed governor according to the invention.
Fig. 2 presents a cross-sectional view of the overspeed governor according to Fig. 1.
Fig. 3 presents a cross-sectional view of the parts of the unintended movement governor according to Figs. 1-2 viewed from the side, which cross-sectional view is perpendicular in relation to the direction of the view of Fig. 2.
Fig. 4 presents a three-dimensional explosion drawing of the parts of Fig. 3.
Fig. 5a presents a situation in which the positioning means have positioned the part 2 in relation to the pulley 1 in a basic position I.
Fig. 5b presents a situation in which the part 2 is moved in relation to the pulley 1 away from the basic position I.
Fig. 6 presents an elevator according to the invention.

### DETAILED DESCRIPTION OF THE INVENTION

The unintended movement governor 10 according to the invention for limiting the movement of a moving object comprises a pulley 1 and a part 2, which is connected to the pulley 1 with coupling means 5 for rotating the part 2 via the coupling means 5 along with the pulley 1. The unintended movement governor also comprises means 3, which means can be temporarily switched into a state limiting the movement of the part 2, for limiting the rotation of the pulley 1 via the part 2. In this way the rotation of the part 2 along with the pulley 1 can be impaired, preferably completely prevented. It follows from limiting the rotation of the part 2 that relative movement is produced between the part 2 and the pulley 1 if the pulley 1 rotates when the movement of the part 2 is limited. The part 2 is arranged to stop the rotation of the pulley 1 only after the part 2 and the pulley 1 have moved a certain pre-determined amount (A,B) with respect to each other. In this way a structure with which a certain movement margin can be permitted for the pulley 1 can be formed, within the scope of which movement margin the essentially free movement of the pulley is permitted after the moment of time when the means 3 are switched into a state limiting the movement of the part 2. When the means 3 are in the state limiting the movement of the part 2, they most preferably, but not necessarily, completely prevent the rotation of the part 2 along with the pulley 1.

The part 2 is connected to the pulley with coupling means 5 permanently, so that the part is able to rotate along with the pulley 1 in normal drive of the elevator. The part 2 and the pulley 1 are able to move with respect to each other because the coupling means 5 permit the movement of the pulley 1 and the part 2 with respect to each other to the extent of a limited movement margin. The movement margin is limited by arranging a detent 7 in connection with the part 2 and a second detent 8 to rotate in a fixed manner along with the pulley 1, which detents are arranged to meet after the part 2 and the pulley 1 have moved a pre-determined amount (A,B) with respect to each other, e.g. a pre-selected amount between 40-90 degrees. The detent 7 thus prevents continuation of the movement of the detent 8 in relation to the detent 7 and because the means 3 impair the movement of the part 2 and therefore also the movement of the detent 8, support force is transmitted from the means 3 to the detent 8 and further to the pulley 1, to which the detent 8 is rigidly fixed. The part 2 and the pulley 1 are able to move with respect to each other because there is a bearing 10 between the part 2 and the pulley 1, which bearing is able to roll guided by the ball race 9 comprised in the pulley 1. In the relative movement the pulley 1 and the part 2 rotate co-axially with respect to each other such that an angular displacement occurs between them. The part 2 does not change its shape in the rotation but it could also be arranged to be different.

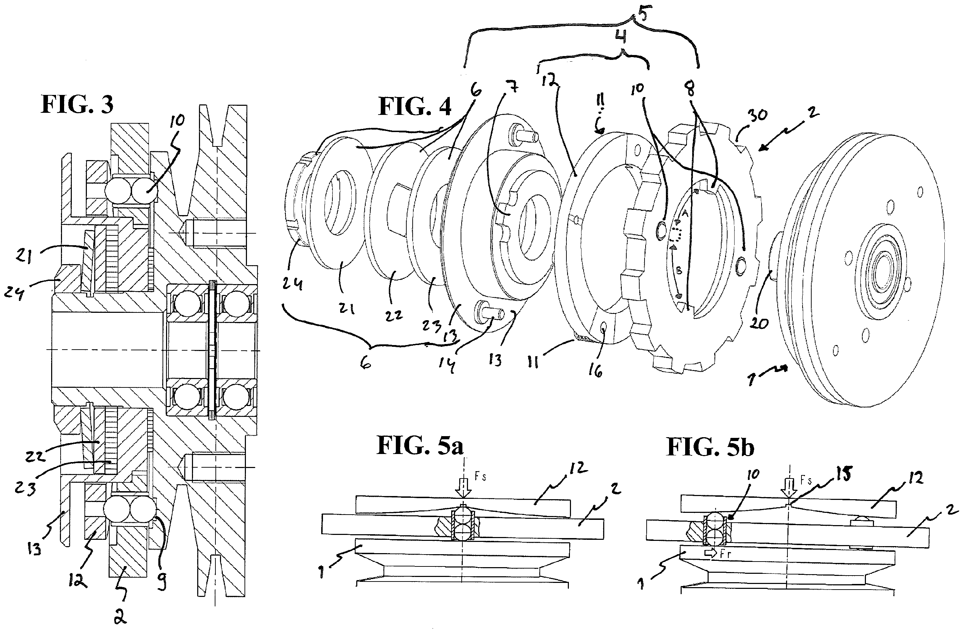

The coupling means 5 comprise means 4 for positioning the part 2 in relation to the pulley 1 in a certain basic position (I) irrespective of the position of the pulley 1. Also the means 4 rotate along with the pulley 1 in normal drive of the elevator. An advantage of the positioning is that in this way at the stopping moment of the part 2 the means 3 have a movement margin between the part 2 and the pulley 1 irrespective of the position of the pulley. Fig. 5a presents the position of the parts in the direction of the radius of the pulley 1 and of the part 2 with respect to each other in situation I, and Fig. 5a presents the situation in situation II. The means 4 comprise a ramp plate 12 connected essentially in a fixed manner to the overspeed governor pulley, which plate is tensioned by means of a spring 11 supported on the pulley 1 (via parts 6 and 13) to press with the force Fs in the direction of the center of rotation of the pulley 1 and of the part 2 against the positioning element (the bearing 10 in the figure) fixed to the part 2. The ramp plate 12 comprises a surface, which surface faces obliquely to both directions of rotation in relation to the plane of rotation. The aforementioned force Fs in the axial direction is arranged to exert a resultant force only in the axial direction between the pulley 1 and 2 (or not necessarily even that) when the ramp plate and thus also the pulley 1 are in the basic position I in relation to the part 2. Rotating the part 2 in relation to the ramp plate away from the basic position I causes the bearing 10 to move following the surface of the ramp into a position, in which the ramp plate does not only exert axial resultant force on the part 2 from the effect of the aforementioned force in the axial direction but also exerts force in the tangential direction of the part 2, which force takes its support force from the pulley 1. The force Fr in the tangential direction endeavors to return the ramp plate and thus also the pulley 1 back to the basic position I in relation to the part 2, in which basic position the resultant force between the pulley 1 and the part 2 is 0 in the tangential direction. Rotating the ramp plate in relation to the part 2 in either direction of rotation whatsoever is arranged to produce tangential force (moment) on the part 2, which force endeavors to return the part 2 to the basic position I. The part 2 is thus arranged to be positioned in relation to the pulley 1 in the basic position I in a monostable manner, with moving in either direction of rotation from which position producing an increasing resistance.

It is advantageous to arrange the means 4 to resist the relative movement between the part 2 and the pulley 1 with a resisting force that differs from constant, preferably such that the resistance decreases after moving away from the basic position I (threshold resisting force), preferably quickly after moving away, after which when the relative movement increases the resisting force remains essentially constant or increases. As a result of the threshold resisting force the run-time speed variations of the pulley 1 are not able to rotate the part 2 away from the positioned basic position I. The threshold resisting force can be produced by the shaping of the ramp, e.g. such that the effect direction of the surface of the ramp on the bearing 10 changes as the relative movement of the bearing 10 and of the ramp plate 12 progresses. A bearing ball of the bearing 10 can, e.g. while being in the basic position I settle into the groove 15 of the ramp plate, exiting from which groove requires overcoming the threshold force.

The coupling means 5 permit the movement of the pulley 1 and the part 2 with respect to each other to the extent of a limited movement margin, which movement margin corresponds to the distance of rotation between the detents 8 and 7. The position of the detent 8 in relation to detents 7 in the situation of the basic position I is illustrated with a dashed line in the figure. The movement margin is preferably present in both directions of rotation, and the movement margin in both directions of rotation determines the distance A and B. If the pulley rotates in the first direction when the means 3 are in the state limiting the movement of the part 2, the part 2 is arranged to stop the rotation of the pulley 1 after the part 2 and the pulley 1 have moved a pre-determined amount A with respect to each other away from the basic position I, and if the pulley rotates in the second direction when the means 3 are in the state limiting the movement of the part 2, the part 2 is arranged to stop the rotation of the pulley 1 after the part 2 and the pulley 1 have moved a pre-determined amount B with respect to each other away from the basic position I. The aforementioned stopping is arranged by means of the detents 8 and 7 because their meeting prevents continuation of the relative movement.

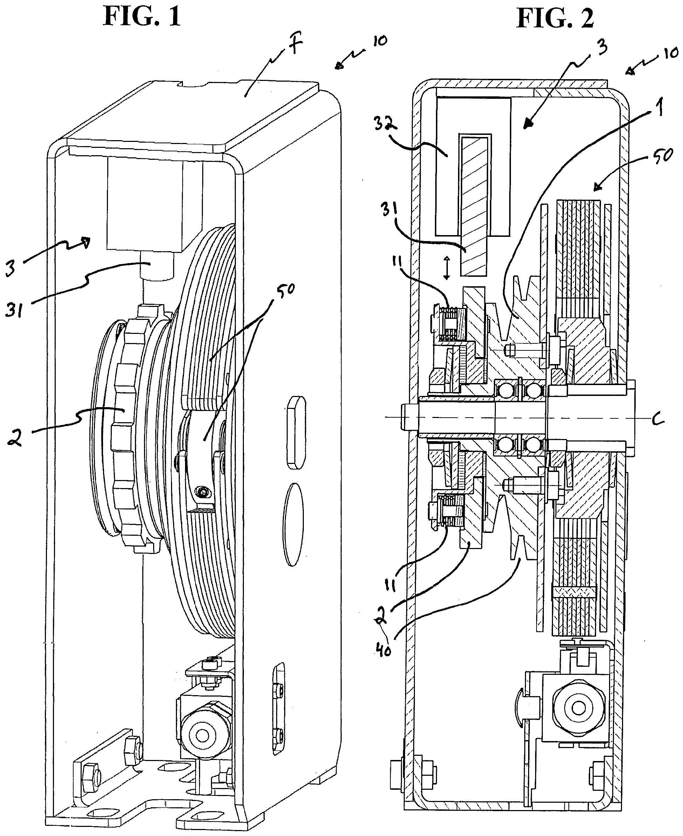

The unintended movement governor comprises a friction joint somewhere between the part 2 and the pulley 1, which joint is arranged to give way and to permit the rotation of the pulley 1 even after the part 2 and the pulley 1 have moved a pre-determined amount (A,B) with respect to each other, if a moment that exceeds a preset limit is exerted on the friction joint. Most preferably this is arranged as described in the figures such that the detent 7 is connected to the pulley 1 via the friction joint parts 6. Figs. 2,3 and 4 show how the fixing is performed. A locking plate 22 that is fixed in an unrotatable manner to the end of the shaft rotates along with the shaft 20 that is connected in a fixed manner to the pulley 1, which plate is pressed against the friction plate 23 with a cup spring 21 supported on the shaft 20 via a lock 24, which friction plate, for its part, is supported on the coupling part 13 supported in an unrotatable manner on the detent 7. The friction plate 23 normally keeps the coupling part 13 unrotated in relation to the pulley 1 with the friction force. A ramp plate 12 is connected to the coupling part 13 by means of pins 14, which extend through the springs 11 to the holes 16 of the ramp plate 12 keeping the coupling part and the ramp part unrotatable with respect to each other.

The rotation of the pulley 1 can be affected in an impeding manner through the part 2 via the coupling means 5. The part 2 is arranged to rotate moved by the pulley (1) around the same center of rotation C with the pulley 1. It is such in its structure that it comprises a section surrounding the center of rotation, to which the means 3 can be transferred to act on the movement of the part 2 in a limiting manner, preferably essentially irrespective of the position to which the part 2 has rotated. The independence from the position is achieved such that the section surrounding the center of rotation comprises effect points 30 for the means 3, which effect points are essentially evenly distributed around the center of rotation and pass around the center of rotation forming a full effect point circle. The part 2 is disk-shaped. In the state limiting the movement of the part 2 the means 3 act on the part 2 in its radial direction. As presented in Fig. 2 the means 3 comprise an element 31 that can be transferred to act on the part 2 by moving it in the radial direction to the rotating trajectory of the part 2 (e.g. of the toothing in the figures). Alternatively or additionally the means 3 can comprise a friction piece to be pressed against the part 2 for limiting the movement of the part 2. In this way in the state limiting the movement the means 3 take support force for limiting the movement of the part 2 from the structure F that supported in its position, and limit the movement of the part 2 by causing profile locking and/or friction between the means 3 and the part 2. The means 3 preferably comprise an actuator 32, preferably a solenoid, for switching the means 3 into the state limiting the movement of the part 2 and out of it.

The unintended movement governor 10 comprises a frame 1 to be installed into its position, which frame supports the pulley 1 rotating in relation to the frame 1. Means (rope groove 40) are in connection with the pulley 1 for transmitting the movement of the object of the movement limitation, more particularly of the elevator car, to the pulley 1. The triggering of gripping can be correspondingly transmitted to the safety gears via these means. The rope groove can be integrated in the structure of the overspeed governor pulley 2 itself or in a part fixed to it. The overspeed governor preferably, but not necessarily, also comprises a second means 50 for decelerating the speed of rotation of the pulley 1. The second means 50 are preferably fixed to the overspeed governor pulley 2 and arranged to activate with some prior-art method, for instance, on the principle of inertia (e.g. centrifugal) depending on the speed of rotation of the pulley 1 to prevent overspeed of the pulley 1 / elevator car. The overspeed governor preferably, but not necessarily, also comprises means for controlling the means 3, such as the solenoid 32 presented. The means can be, e.g. the electric control current of a solenoid. Preferably the unintended movement governor additionally comprises means for receiving a wireless signal, with which means control data can be supplied to the overspeed governor from a distance. Wireless data transfer can occur with some prior-art method, such as e.g. as electromagnetic radiation or as acoustic signals. It is obvious that the information can, if so desired, also be transmitted along a wire.

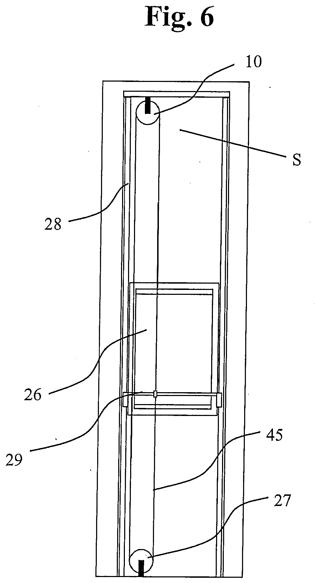

Fig. 6 illustrates an elevator according to the invention, which elevator comprises an elevator car 26 and car guide rails 28. The elevator comprises some unintended movement governor presented in this application installed in the elevator system. The elevator also comprises means for moving the elevator car, such as e.g. ropes connected to the elevator car, and a traction sheave. The pulley 1 of the unintended movement governor 10 is fitted to rotate according to the movement of the elevator car and is connected to the safety gear 29 that is in connection with the elevator car. The unintended movement governor 10 is preferably installed in the elevator hoistway S supported by the frame F in the manner presented in Fig. 4, or alternatively in the machine room, and connected to the safety gear 29 via the overspeed governor rope 10 passing around the pulley 1. The rope 45 is also preferably arranged to pass around a diverting pulley 27 in the elevator hoistway or elsewhere in the building such that the rope essentially forms an endless loop. The overspeed governor pulley 2 thus rotates according to the movement of the elevator car via the rope 10. The elevator according to the invention could alternatively operate so that the unintended movement governor 10 is installed on the elevator car supported by the frame F to take the movement from, e.g. a guide rail or a rope of the elevator.

In normal drive when the elevator car moves, the means 3 pulled by the solenoid 32 are in the state that does not limit the rotation of the part 2, as presented by Fig. 1, and have no effect on the effect points 30. The part 2 is thus able to rotate freely along with the pulley 1. The effect point 30 is preferably, in the manner presented by figures, an indent in the part 2, which indent comprises a countersurface to the countersurface comprised in the element 31. The effect points could also be different, e.g. points on the friction surface, against which the element 31 can be pressed in order to produce friction force.

When using the overspeed governor according to the invention as an anti-creeping apparatus, the means 3 are switched into the state limiting the rotation of the part 2 by disconnecting the current of the solenoid 9 when the car is stopped, e.g. at the position of the floor. If the elevator car in this situation (when the means 3 are in the state limiting the movement of the part 2) moves upwards and/or downwards, e.g. caused by loading or rope slip, when the movement margin of the coupling part 3 is exceeded, the stopping of the movement of the pulley 1 occurs in the manner described above such that it brakes the overspeed governor rope 10 moving along with the elevator car, the displacement of which rope in relation to the safety gear frame moving along with the car triggers the gripping to the guide rails of the car. Owing to the structure of the unintended movement governor 10 described earlier it is possible that the free movement of the elevator car before the stopping of the pulley and the starting of the gripping is preset in its length irrespective of the position in which the pulley 1 is at the moment the means 3 move to act on the part 2. If the operation of the part 1 and of the pulley 1 is made to allow them to move with respect to each other from the effect of the rotation of the pulley 1, irrespective of the direction of rotation, the apparatus can function as an anti-creep apparatus in both vertical directions and is particularly well suited to an elevator provided with a counterweight. The overspeed governor described above can also be used to trigger gripping of a moving elevator car by connecting the element 31 to a moving part 2, as a consequence of which the movement of the pulley 1 decelerates/stops and gripping starts. In this way gripping can be triggered irrespective of the speed of rotation of the pulley. This can be desirable to perform e.g. in an emergency situation or when testing the overspeed governor and/or the gripping.

The presence of a friction switch (parts 6) and/or of means 50 is not necessary from the viewpoint of the invention. The part 2 can, if necessary, be arranged to act on the pulley 1 such that it does not necessarily stop the pulley 1 immediately after a certain amount of relative movement is achieved but instead in some cases an essential deceleration can also be sufficient. This can be achieved, if necessary, e.g. such that the aforementioned friction switch allows the pulley 1 to rotate in a decelerated manner. The aforementioned pre-determined amount is preferably such that the rotation of the pulley 1 permitted by it before stopping the pulley permits a movement of 70-100 mm of the elevator car. The pre-determined amount can be, e.g. 40-90 degrees, which can be the angular deviation of the pulley 1 and of the part 2, if it is desired to measure the amount in degrees of angle. The pre-determined amount can be fitted to be that desired, e.g. by selecting the positioning of detents 7 and 8. Preferably the rope mentioned in the invention is a rope or a belt.

It is obvious to the person skilled in the art that the invention is not limited to the embodiments described above, in which the invention is described using examples, but that many adaptations and different embodiments of the invention are possible within the scope of the inventive concept defined by the claims presented below.

## Claims

1. Unintended movement governor of an elevator for limiting the movement of a moving object of an elevator, preferably of an elevator car, which comprises
- a pulley (1)
- a part (2),
- a coupling means (5), with which the part (2) is connected to the pulley (1) for rotating the part (2) via the coupling means along with the pulley (1),
- a means (3), which means can be switched into a state limiting the movement of the part (2),
wherein when the means (3) are in the state limiting the movement of the part (2) they are arranged to impair the rotation of the part (2) along with the pulley (1) such that relative movement is caused between the part (2) and the pulley (1) if the pulley (1) rotates, and in that when the part (2) is in the limited state in terms of its movement it is arranged to stop the rotation of the pulley (1) or at least essentially decelerate the rotation after the part (2) and the pulley (1) have moved a pre-determined amount (A,B) with respect to each other, **characterized in that** when the means (3) are in the state limiting the movement of the part (2) the means (3) are arranged to cause relative movement between the part (2) and the pulley (1) when the pulley rotates in either direction of rotation.

2. Unintended movement governor according to claim 1 above, **characterized in that** the part (2) is arranged to rotate moved by the pulley (1) around the same center of rotation with the pulley 1 and it comprises a section surrounding the center of rotation, to which the means (3) can be transferred to act on the movement of the part 2 in a limiting manner, preferably essentially irrespective of the position to which the part (2) has rotated.

3. Unintended movement governor according to any of the preceding claims, **characterized in that** the section surrounding the center of rotation comprises effect points (30) for the means (3), which effect points are essentially evenly distributed around the center of rotation and encircle the center of rotation forming a full effect point circle.

4. Unintended movement governor according to any of the preceding claims, **characterized in that** the means (3) comprise an element, such as a detent or friction piece, which can be transferred to act on the part (2) by moving it, preferably in the radial direction, to the rotation trajectory of the part (2) or against the part (2).

5. Unintended movement governor according to any of the preceding claims, **characterized in that** in the state limiting movement the means 3 take support force for limiting the movement of the part 2 from the structure (F) that is supported in its position and limit the movement of the part (2) by causing profile locking and/or friction between the means (3) and the part (2).

6. Unintended movement governor according to any of the preceding claims, **characterized in that** it comprises means (4) for positioning the part (2) in a certain basic position (I) in relation to the pulley (1) irrespective of the position and/or of the speed of rotation of the pulley (1), most preferably irrespective of the centrifugal forces.

7. Unintended movement governor according to any of the preceding claims, **characterized in that** if the pulley rotates in the first direction when the means (3) are in the state limiting the movement of the part (2), the part (2) is arranged to stop the rotation of the pulley (1) after the part (2) and the pulley (1) have moved a pre-determined amount (A) with respect to each other away from the basic position (I), and **in that** if the pulley rotates in the second direction when the means (3) are in the state limiting the movement of the part (2), the part (2) is arranged to stop the rotation of the pulley (1) after the part (2) and the pulley (1) have moved a pre-determined amount (B) with respect to each other away from the basic position (I).

8. Unintended movement governor according to any of the preceding claims, **characterized in that** it comprises means (4) for positioning the part (2) in relation to the pulley (1) in a monostable manner in a certain basic position (I).

9. Unintended movement governor according to any of the preceding claims, **characterized in that** the means (4) comprise at least one spring (11), which is arranged to act between the pulley (1) and the part (2), preferably such that the aforementioned spring (11) is arranged to position the pulley (1) and the part (2) by means of the spring force acting in the axial direction.

10. Unintended movement governor according to any of the preceding claims, **characterized in that** the means (4) are arranged to position the pulley (1) and the part (2) by means of the force acting in the axial direction, which force in the axial direction produces a force component pointing in the direction of rotation by means of the shaping of the parts between the pulley (1) and the part (2).

11. Unintended movement governor according to any of the preceding claims, **characterized in that** it comprises means (4) for positioning the part (2), which means are arranged to impair the relative movement of the part (2) and of the pulley (1) away from the basic position (I) and to return the part (2) and the pulley (1) to the basic position (I) if the movement of the part (2) is not limited by the means (3) .

12. Unintended movement governor according to any of the preceding claims, **characterized in that** the part (2) is arranged to stop the rotation of the pulley (1) after the part (2) and the pulley (1) have moved a pre-determined amount (A,B) with respect to each other, but which unintended movement governor comprises a friction joint somewhere between the part (2) and the pulley (1), which joint is arranged to give way and to permit the rotation of the pulley (1) even after the part (2) and the pulley (1) have moved the pre-determined amount (A,B) with respect to each other, if a moment that exceeds a preset limit is exerted on the friction joint.

13. Elevator, which elevator comprises at least an elevator car (26), which is arranged to travel backwards and forwards in essentially the vertical direction, preferably along guide rails (28), and a safety gear (29) disposed in connection with the elevator car (26), and also at least one unintended movement governor (8), which comprises at least a pulley (1), which is fitted to rotate moved by the elevator car, and which is connected to a safety gear (29) that is in connection with the elevator car, preferably via a rope (10) that passes around a diverting pulley (27) and the pulley (2), **characterized in that** the unintended movement governor (8) is according to any of claims 1-12.

14. Elevator according to claim 13, **characterized in that** the stopping or at least the deceleration of the aforementioned pulley (1) is arranged to cause triggering of the brake, preferably of a safety gear (29), disposed on the elevator car.

15. Elevator according to claim 13 or 14, **characterized in that** when the means (3) are in the state limiting the movement of the part (2) the unintended movement governor (8) is arranged to permit the movement of the elevator car (26) in relation to the floor a certain pre-determined distance, which distance is preferably a distance between 70-100 mm, after moving which distance as a result of limiting the movement of the part (2) the rotation of the pulley (1) is arranged to stop, which stopping of the pulley is arranged to cause triggering of a brake, preferably of a safety gear (29), disposed on the elevator car.

16. Elevator according to any of claims 13 to 15, **characterized in that** the control comprised in the elevator is arranged to switch the means (3) into a state limiting the movement of the part (2) in connection with stopping of the elevator car (26) at a floor, preferably at the moment of activation of the machinery brake acting on the traction sheave of the elevator or after it, preferably at the latest 1 second after the moment of activation of the machinery brake.

## Patentansprüche

1. Bewegungsbegrenzer eines Aufzugs zum Begrenzen der unbeabsichtigten Bewegung eines sich bewegenden Objekts eines Aufzugs, vorzugsweise einer Aufzugskabine, umfassend:
- eine Rolle (1),
- ein Teil (2),
- ein Kopplungsmittel (5), über welches das Teil (2) mit der Rolle (1) verbunden ist, um das Teil (2) mittels der Kopplungsmittel zusammen mit der Rolle (1) zu rotieren,
- eine Einrichtung (3), die in einen Status geschaltet werden kann, in welchem sie die Bewegung des Teils (2) begrenzt,
wobei die Einrichtung (3), wenn sie in dem die Bewegung des Teils (2) begrenzenden Status ist, konzipiert ist, eine Rotation des Teils (2) zusammen mit der Rolle (1) zu beeinträchtigen, so dass eine Relativbewegung, die zwischen dem Teil (2) und der Rolle (1) verursacht wird, wenn die Rolle (1) rotiert, und dass, wenn das Teil (2) hinsichtlich seiner Bewegung in dem begrenzten Status ist, es konzipiert ist, die Rotation der Rolle (1) zu stoppen oder zumindest wesentlich abzubremsen, nachdem das Teil (2) und die Rolle (1) sich um einen vorbestimmten Betrag (A,B) relativ zueinander bewegt haben, **dadurch gekennzeichnet, dass**, wenn die Einrichtung (3) in dem Status ist, in welchem sie die Bewegung des Teils (2) begrenzt, die Einrichtung (3) konzipiert ist, eine Relativbewegung zwischen dem Teil (2) und der Rolle (1) zu verursachen, wenn die Rolle in jede der beiden Richtungen rotiert.

2. Bewegungsbegrenzer nach Anspruch 1, **dadurch gekennzeichnet, dass** das Teil (2) konzipiert ist, um bewegt durch die Rolle (1) um das gleiche Rotationszentrum wie die Rolle (1) zu rotieren, und es einen das Rotationszentrum umgebenden Abschnitt enthält, an welchem die Einrichtung (3) transferiert werden kann, um auf die Bewegung des Teils (2) in einer begrenzenden Weise Einfluss zu nehmen, vorzugsweise im Wesentlichen unabhängig von der Position, in welche das Teil (2) rotiert ist.

3. Bewegungsbegrenzer nach einem der vorhergehenden Ansprüche, **dadurch gekennzeichnet, dass** der das Rotationszentrum umgebende Abschnitt Wirkpunkte (30) für die Einrichtung (3) enthält, welche Wirkpunkte um das Rotationszentrum Wesentlichen gleichmäßig verteilt sind und das Rotationszentrum umgeben, so dass ein voller Wirkpunktkreis gebildet wird.

4. Bewegungsbegrenzer nach einem der vorhergehenden Ansprüche, **dadurch gekennzeichnet, dass** die Einrichtung (3) ein Element enthält, wie zum Beispiel eine Raste oder ein Friktionsteil, welches transferiert werden kann, um auf das Teil (2) einzuwirken durch seine Bewegung, vorzugsweise in radialer Richtung, in Richtung auf den Rotationsweg des Teils (2) oder gegen das Teil (2).

5. Bewegungsbegrenzer nach einem der vorhergehenden Ansprüche, **dadurch gekennzeichnet, dass** die Einrichtung (3) in dem Status, in welchem sie die Bewegung begrenzt, die Stützkraft zum Begrenzen der Bewegung des Teils (2) von der Struktur (F) nimmt, welche in ihrer Position abgestützt ist, und die Bewegung des Teils (2) begrenzt durch einen Formeingriff und/oder Friktionseingriff zwischen der Einrichtung (3) und dem Teil (2).

6. Bewegungsbegrenzer gemäß einem der vorhergehenden Ansprüche, **dadurch gekennzeichnet, dass** er eine Einrichtung (4) enthält zum Positionieren des Teils (2) in einer gewissen Basisposition (I) mit Bezug auf die Rolle (1), unabhängig von der Position und/oder der Rotationsgeschwindigkeit der Rolle (1), am bevorzugtesten unabhängig von der Zentrifugalkraft.

7. Bewegungsbegrenzer nach einem der vorhergehenden Ansprüche, **dadurch gekennzeichnet, dass**, wenn die Rolle sich in einer ersten Richtung dreht, wenn die Einrichtung (3) in einem die Begrenzung des Teils (2) verhindernden Status ist, das Teil (2) konzipiert ist, die Rotation der Rolle (1) zu stoppen, nachdem das Teil (2) und die Rolle (1) sich relativ zueinander um einen vorbestimmten Weg (A) von der Basisposition (I) hinweg bewegt haben, und dass, wenn die Rolle sich in der zweiten Richtung dreht, wenn die Einrichtung (3) in einem die Bewegung des Teils (2) begrenzenden Status ist, das Teil (2) konzipiert ist, die Rotation der Rolle (1) zu stoppen, nachdem sich das Teil (2) und die Rolle (1) um einen vorbestimmten Weg (B) relativ zueinander von der Basisposition (I) weg bewegt haben.

8. Bewegungsbegrenzer nach einem der vorhergehenden Ansprüche, **dadurch gekennzeichnet, dass** es eine Einrichtung (4) enthält zum Positionieren des Teils (2) relativ zu der Rolle (1) in einer monostabilen Weise in einer bestimmten Basisposition (I).

9. Bewegungsbegrenzer nach einem der vorhergehenden Ansprüche, **dadurch gekennzeichnet, dass** die Einrichtung (4) wenigstens eine Feder (11) enthält, die konzipiert ist, um zwischen der Rolle (1) und dem Teil (2) zu agieren, vorzugsweise so, dass die vorgenannte Feder (11) konzipiert ist, die Rolle (1) und das Teil (2) mittels der in axialer Richtung wirkenden Federkraft zu positionieren.

10. Bewegungsbegrenzer nach einem der vorhergehenden Ansprüche, **dadurch gekennzeichnet, dass** die Einrichtung (4) konzipiert ist, die Rolle (1) und das Teil (2) mittels der in axialer Richtung wirkenden Kraft zu positionieren, welche in axialer Richtung wirkende Kraft eine Kraftkomponente erzeugt, die mittels der Form der Formteile zwischen dem der Rolle (1) und dem Teil (2) in Rotationsrichtung weist.

11. Bewegungsbegrenzer nach einem der vorhergehenden Ansprüche, **dadurch gekennzeichnet, dass** er eine Einrichtung (4) zum Positionieren des Teils (2) enthält, welche Einrichtung konzipiert ist, die Relativbewegung des Teils (2) und der Rolle (1) weg von der Basisposition (I) zu behindern und das Teil (2) und die Rolle (1) zur Basisposition (I) zurückzuführen, wenn die Bewegung des Teils (2) nicht mittels der Einrichtung (3) begrenzt ist.

12. Bewegungsbegrenzer nach einem der vorhergehenden Ansprüche, **dadurch gekennzeichnet, dass** das Teil (2) konzipiert ist, die Rotation der Rolle (1) zu stoppen, nachdem das Teil (2) und die Rolle (1) sich um einen vorbestimmten Weg (A,B) relativ zueinander bewegt haben, jedoch welcher Bewegungsbegrenzer eine Friktionsverbindung irgendwo zwischen dem Teil (2) und der Rolle (1) aufweist, welche Friktionsverbindung konzipiert ist, einen Weg bereitzustellen und die Rotation der Rolle (1) zu erlauben, selbst nachdem das Teil (2) und die Rolle (1) sich um den vorbestimmten Weg (A,B) relativ zueinander bewegt haben, wenn ein einen vorgesetzten Grenzwert überschreitendes Moment auf die Friktionsverbindung ausgeübt wird.

13. Aufzug, welcher Aufzug wenigstens eine Aufzugskabine (26) aufweist, die konzipiert ist , in im Wesentlichen vertikaler Richtung, vorzugsweise entlang von Führungsschienen (28) zurück und vorwärts zu fahren, und welcher Aufzug eine Fangvorrichtung (29) aufweist, die in Verbindung mit der Aufzugskabine (26) angeordnet ist, als auch wenigstens ein Bewegungsbegrenzer (8), der wenigstens eine Rolle (1) aufweist, die konzipiert ist, bewegt durch die Aufzugskabine zu rotieren und welche vorzugsweise mittels eines um eine Umlenkrolle (27) und die Rolle (1) geführten Seils (10) mit einer Fangvorrichtung (29) verbunden ist, die in Verbindung mit der Aufzugskabine steht, **dadurch gekennzeichnet, dass** der Bewegungsbegrenzer (8) gemäß einem der Ansprüche 1-12 ausgebildet ist.

14. Aufzug nach Anspruch 13, **dadurch gekennzeichnet, dass** das Stoppen oder zumindest die Abbremsung der vorgenannten Rolle (1) konzipiert ist, ein Triggern der Bremse zu verursachen, vorzugsweise einer Fangvorrichtung (29), die an der Aufzugskabine angeordnet ist.

15. Aufzug nach Anspruch 13 oder 14, **dadurch gekennzeichnet, dass**, wenn die Einrichtung (3) sich in dem Status befindet, der die Bewegung des Teils (2) begrenzt, der Bewegungsbegrenzer (8) konzipiert ist, die Bewegung der Aufzugskabine (26) relativ zu dem Stockwerk um eine vorgegebene Distanz zu erlauben, welche Distanz vorzugsweise eine Distanz zwischen 70 und 100 mm ist, wobei nach dem Bewegen dieser Distanz als ein Resultat der Begrenzung der Bewegung des Teils (2) die Rotation der Rolle (1) konzipiert ist, gestoppt zu werden, welches Stoppen der Rolle konzipiert ist, ein Triggern der Bremse zu verursachen, vorzugsweise einer Fangvorrichtung (29), die an der Aufzugskabine angeordnet ist.

16. Aufzug nach einem der Ansprüche 13 bis 15, **dadurch gekennzeichnet, dass** die Steuerung, die in dem Aufzug vorgesehen ist, konzipiert ist, die Einrichtung (3) in einen Status zu versetzen, der die Bewegung des Teils (2) in Verbindung mit dem Stoppen der Aufzugskabine (26) an einem Stockwerk begrenzt, vorzugsweise im Moment der Aktivierung der auf die Treibscheibe des Aufzugs wirkenden Maschinenbremse oder danach, vorzugsweise spätestens eine Sekunde nach dem Moment der Aktivierung der Maschinenbremse.

## Revendications

1. Limiteur de déplacements involontaires d'un ascenseur destiné à limiter le déplacement d'un objet en mouvement d'un ascenseur, de préférence d'une cabine d'ascenseur, qui comprend :
- une poulie (1)
- une pièce (2),
- un moyen de couplage (5), avec lequel la pièce (2) est reliée à la poulie (1) pour faire tourner la pièce (2) par le biais du moyen de couplage conjointement avec la poulie (1),
un moyen (3), ledit moyen pouvant être commuté dans un état limitant le déplacement de la pièce (2),
dans lequel, lorsque les moyens (3) sont dans l'état limitant le déplacement de la pièce (2), ils sont agencés pour diminuer la rotation de la pièce (2) conjointement avec la poulie (1) de telle sorte qu'un déplacement relatif est provoqué entre la pièce (2) et la poulie (1) si la poulie (1) tourne, et que, lorsque la pièce (2) est dans l'état limité en termes de son déplacement, elle est agencée pour arrêter la rotation de la poulie (1) ou au moins sensiblement décélérer la rotation après que la pièce (2) et la poulie (1) se sont déplacées d'une quantité prédéterminée (A, B) l'une par rapport à l'autre, **caractérisé en ce que**, lorsque les moyens (3) sont dans l'état limitant le déplacement de la pièce (2), les moyens (3) sont agencés pour provoquer un déplacement relatif entre la pièce (2) et la poulie (1) lorsque la poulie tourne dans l'un ou l'autre sens de rotation.

2. Limiteur de déplacements involontaires selon la revendication 1 ci-dessus, **caractérisé en ce que** la pièce (2) est agencée pour tourner déplacée par la poulie (1) autour du même centre de rotation avec la poulie 1 et elle comprend une section entourant le centre de rotation, vers laquelle les moyens (3) peuvent être transférés pour agir sur le déplacement de la pièce (2) de manière limitative, de préférence sensiblement sans tenir compte de la position vers laquelle la pièce (2) a tourné.

3. Limiteur de déplacements involontaires selon une quelconque des revendications précédentes, **caractérisé en ce que** la section entourant le centre de rotation comprend des points d'effet (30) pour les moyens (3), lesdits points d'effet étant sensiblement régulièrement répartis autour du centre de rotation et encerclant le centre de rotation formant un cercle complet de points d'effet.

4. Limiteur de déplacements involontaires selon une quelconque des revendications précédentes, **caractérisé en ce que** les moyens (3) comprennent un élément, tel qu'une pièce de détente ou de frottement, qui peut être transféré pour agir sur la pièce (2) en la déplaçant, de préférence dans la direction radiale, vers la trajectoire de rotation de la pièce (2) ou contre la pièce (2).

5. Limiteur de déplacements involontaires selon une quelconque des revendications précédentes, **caractérisé en ce que**, dans l'état limitant le déplacement, les moyens (3) prennent une force de support pour limiter le déplacement de la pièce (2) par rapport à la structure (F) qui est supportée dans sa position et limiter le déplacement de la pièce (2) en provoquant un verrouillage de profilé et/ou un frottement entre les moyens (3) et la pièce (2).

6. Limiteur de déplacements involontaires selon une quelconque des revendications précédentes, **caractérisé en ce qu'**il comprend des moyens (4) pour positionner la pièce (2) dans une certaine position de base (I) par rapport à la poulie (1) sans tenir compte de la position et/ou de la vitesse de rotation de la poulie (1), le plus préférablement sans tenir compte des forces centrifuges.

7. Limiteur de déplacements involontaires selon une quelconque des revendications précédentes, **caractérisé en ce que**, si la poulie tourne dans la première direction lorsque les moyens (3) sont dans l'état limitant le déplacement de la pièce (2), la pièce (2) est agencée pour arrêter la rotation de la poulie (1) après que la pièce (2) et la poulie (1) ont été déplacées d'une quantité prédéterminée (A) l'une par rapport à l'autre à distance de la position de base (I), et **en ce que**, si la poulie tourne dans la seconde direction lorsque les moyens (3) sont dans l'état limitant le déplacement de la pièce (2), la pièce (2) est agencée pour arrêter la rotation de la poulie (1) après que la pièce (2) et la poulie (1) ont été déplacées d'une quantité prédéterminée (B) l'une par rapport à l'autre à distance de la position de base (I).

8. Limiteur de déplacements involontaires selon une quelconque des revendications précédentes, **caractérisé en ce qu'**il comprend des moyens (4) pour positionner la pièce (2) par rapport à la poulie (1) de manière monostable dans une certaine position de base (I).

9. Limiteur de déplacements involontaires selon une quelconque des revendications précédentes, **caractérisé en ce que** les moyens (4) comprennent au moins un ressort (11), qui est agencé pour agir entre la poulie (1) et la pièce (2), de préférence de telle sorte que ledit ressort (11) est agencé pour positionner la poulie (1) et la pièce (2) à l'aide de la force de ressort agissant dans la direction axiale.

10. Limiteur de déplacements involontaires selon une quelconque des revendications précédentes, **caractérisé en ce que** les moyens (4) sont agencés pour positionner la poulie (1) et la pièce (2) à l'aide de la force agissant dans la direction axiale, ladite force dans la direction axiale produisant une composante de force pointant dans le sens de rotation à l'aide du façonnage des pièces entre la poulie (1) et la pièce (2).

11. Limiteur de déplacements involontaires selon une quelconque des revendications précédentes, **caractérisé en ce qu'**il comprend des moyens (4) pour positionner la pièce (2), lesdits moyens étant agencés pour diminuer le déplacement relatif de la pièce (2) et de la poulie (1) à distance de la position de base (I) et pour faire retourner la pièce (2) et la poulie (1) vers la position de base (I) si le déplacement de la pièce (2) n'est pas limité par les moyens (3).

12. Limiteur de déplacements involontaires selon une quelconque des revendications précédentes, **caractérisé en ce que** la pièce (2) est agencée pour arrêter la rotation de la poulie (1) après que la pièce (2) et la poulie (1) ont été déplacées d'une quantité prédéterminée (A, B) l'une par rapport à l'autre, mais ledit limiteur de déplacements involontaires comprenant un joint de frottement à un endroit quelconque entre la pièce (2) et la poulie (1), ledit joint étant agencé pour laisser un passage et pour permettre la rotation de la poulie (1) même après que la pièce (2) et la poulie (1) ont été déplacées de la quantité prédéterminée (A, B) l'une par rapport à l'autre, si un couple qui dépasse une limite prédéfinie est exercé sur le joint de frottement.

13. Ascenseur, ledit ascenseur comprenant au moins une cabine d'ascenseur (26), qui est agencée pour se déplacer vers l'arrière et vers l'avant sensiblement dans la direction verticale, de préférence le long de rails de guidage (28), et un engrenage de sécurité (29) disposé en liaison avec la cabine d'ascenseur (26), et également au moins un limiteur de déplacements involontaires (8), qui comprend au moins une poulie (1), qui est installée pour tourner déplacée par la cabine d'ascenseur, et qui est reliée à un engrenage de sécurité (29) qui se trouve en liaison avec la cabine d'ascenseur, de préférence par le biais d'un câble (10) qui passe autour d'une poulie de détour (27) et la poulie (2), **caractérisé en ce que** le limiteur de déplacements involontaires (8) est selon une quelconque des revendications 1 à 12.

14. Ascenseur selon la revendication 13, **caractérisé en ce que** l'arrêt ou au moins la décélération de ladite poulie (1) est agencé(e) pour provoquer le déclenchement du frein, de préférence d'un engrenage de sécurité (29), disposé sur la cabine d'ascenseur.

15. Ascenseur selon la revendication 13 ou 14, **caractérisé en ce que** lorsque les moyens (3) sont dans l'état limitant le déplacement de la pièce (2), le limiteur de déplacements involontaires (8) est agencé pour permettre le déplacement de la cabine d'ascenseur (26) d'une certaine distance prédéterminée par rapport à l'étage, ladite distance étant de préférence une distance entre 70 et 100 mm, après le déplacement à ladite distance avec pour résultat la limitation du déplacement de la pièce (2) la rotation de la poulie (1) est agencée pour s'arrêter, ledit arrêt de la poulie étant agencé pour provoquer le déclenchement d'un frein, de préférence d'un engrenage de sécurité (29), disposé sur la cabine d'ascenseur.

16. Ascenseur selon une quelconque des revendications 13 à 15, **caractérisé en ce que** la commande comprise dans l'ascenseur est agencée pour commuter les moyens (3) dans un état limitant le déplacement de la pièce (2) en liaison avec l'arrêt de la cabine d'ascenseur (26) au niveau d'un étage, de préférence au moment de l'activation du frein des machines agissant sur la poulie d'entraînement de l'ascenseur ou après celle-ci, de préférence au moins 1 seconde après le moment d'activation du frein des machines.
